# EUROPEAN PATENT APPLICATION

(11) **EP 3 229 190 A1**
(43) Date of publication of application: **11.10.2017**
(21) Application number: 15865494.7
(22) Date of filing: 23.09.2015
(51) Int. Cl.: G06Q 20/16

(54) **PAYMENT VERIFICATION METHOD, APPARATUS AND SYSTEM**

(30) Priority: 02.12.2014 CN 201410720880
(71) Applicant: ZTE Corporation, Shenzhen, Guangdong 518057 (CN)
(72) Inventor: LI, Jianmei, Shenzhen Guangdong 518057 (CN)
(74) Representative: Winter, Brandl, Fürniss, Hübner, Röss, Kaiser, Polte - Partnerschaft mbB
(86) International application number: PCT/CN2015/090461
(87) International publication number: WO 2016/086708

(57) **Abstract**

Disclosed are a payment verification method, apparatus and system. The method includes: receiving (S102) a first to-be-verified instruction sent by a payment terminal and a second to-be-verified instruction sent by a money receiving terminal in a payment process; judging (S104) whether the first to-be-verified instruction and the second to-be-verified instruction are identical according to a preset condition; and sending (S106) a verification result to the payment terminal and/or the money receiving terminal. Through adoption of the above technical solutions provided by the present invention, the problem of potential safety hazards as the verification manner is not secure enough in relevant technologies is solved, so as to achieve an effect of enhancing the security of the verification manner.

## Description

### TECHNICAL FIELD

The present invention relates to the field of communication, and in particular relates to a payment verification method, apparatus and system.

### BACKGROUND

With development of Mobile Internet, functions of a mobile phone become more and more powerful and various kinds of application software are also rich and colorful, wherein functions of the various kinds of application software are spread in every aspect of life, relations of the application software to the life of people become more and more close, and services provided by the various kinds of application software become an indispensable part of daily life of people.

Since applications on the mobile phone are mostly related to identity verification, for example, online shopping, payment, identity verification, account login and the like need the identity verification of a user, and in order to ensure the security of operation, a password verification method is adopted under most situations presently, and the method is traditional. Even if the method is used very widely, other people can easily and directly make a payment or transfer accounts through verification once a password is cracked or is known by other people, causing great threat and damage to security of property, individual data and the like of the user and bringing serious consequences. Since the user often needs to set a complex password to reduce the cracked possibility for account security, the operation of inputting the complex password for every verification is very troublesome, and the use is very inconvenient.

In addition, a cash payment manner or a card swiping manner is mostly adopted for on-site payment; the user needs to prepare small changes, or a merchant needs to make changes for the user if the cash payment manner is adopted; and a POS (Point Of Sale) machine is needed for swiping a card, a password needs to be inputted and signing is made on a generated bill if the card swiping manner is adopted. Therefore, the operation is time-consuming and has tedious steps. Additionally, the user possibly forgets specific things purchased after a long time, and the financial management is extremely inconvenient if consumption details are not recorded.

Based on the present verification manner, a more secure, more convenient and faster verification manner is needed, so as to solve the problem of potential safety hazards as the present verification manner is not secure enough.

For the problem of the potential safety hazards as the present verification manner is not secure enough in an existing art, an effective solution has not been proposed so far.

### SUMMARY

Embodiments of the present invention provide a payment verification method, apparatus and system, so as to at least solve the problem of potential safety hazards as the present verification manner is not secure enough in the existing art.

According to one embodiment of the present invention, the present invention provides the payment verification method, including:

receiving a first to-be-verified instruction sent by a payment terminal and a second to-be-verified instruction sent by a money receiving terminal in a payment process; judging whether the first to-be-verified instruction and the second to-be-verified instruction are identical according to a preset condition; and sending a verification result to the payment terminal and/or the money receiving terminal.

In the embodiment of the present invention, the first to-be-verified instruction includes at least one of the following: user feature information and payment account information; and the second to-be-verified instruction includes at least one of the following: user feature information and money receiving terminal information.

In the embodiment of the present invention, the user feature information includes at least one of the following: voice, facial features and retina information; and/or the payment account information includes: account; and/or the money receiving terminal information includes at least one of the following: money receiving terminal ID (Identity) and bill information.

In the embodiment of the present invention, whether the first to-be-verified instruction and the second to-be-verified instruction are identical is judged according to the preset condition in one of the following manners, including: manner I: judging whether pre-stored payment account information of the payment terminal in the preset condition and the payment account information in the first to-be-verified instruction are identical according to the pre-stored payment account information of the payment terminal in the preset condition and judging whether the user feature information in the first to-be-verified instruction and the user feature information in the second to-be-verified instruction are identical according to pre-stored user feature information of the payment terminal in the preset condition; and manner II: judging whether the pre-stored payment account information of the payment terminal in the preset condition and the payment account information in the first to-be-verified instruction are identical according to the pre-stored payment account information of the payment terminal in the preset condition and judging whether the user feature information in the first to-be-verified instruction and the pre-stored user feature information are identical and whether the user feature information in the second to-be-verified instruction and the pre-stored user feature information are identical according to the pre-stored user feature information of the payment terminal in the preset condition.

In the embodiment of the present invention, the verification result is sent to the payment terminal and/or the money receiving terminal in one of the following manners, including: sending a message of successful verification to the payment terminal and/or the money receiving terminal under a condition that judging results in the manner I and in the manner II are respectively "identical"; and sending a message of failed verification to the payment terminal and/or the money receiving terminal under a condition that at least one of the judging results in the manner I or the manner II is "different".

In the embodiment of the present invention, before sending the verification result to the payment terminal and/or the money receiving terminal, the method further includes: generating a consumption detail according to the user feature information and the payment account information in the first to-be-verified instruction and the bill information in the money receiving terminal information in the second to-be-verified instruction; and storing the consumption detail.

In the embodiment of the present invention, the first to-be-verified instruction and the second to-be-verified instruction are received under the following condition: a payment connection is pre-established between the payment terminal and the money receiving terminal.

According to one aspect of the present invention, the present invention provides another payment verification apparatus, including: a receiving module, configured to receive a first to-be-verified instruction sent by a payment terminal and a second to-be-verified instruction sent by a money receiving terminal in a payment process; a judgment module, configured to judge whether the first to-be-verified instruction and the second to-be-verified instruction, which are received by the receiving module, are identical according to a preset condition; and a sending module, configured to send a verification result obtained by the judgment module to the payment terminal and/or the money receiving terminal.

In the embodiment of the present invention, the judgment module, configured to judge whether the first to-be-verified instruction and the second to-be-verified instruction are identical according to the preset condition in one of the following manners, including: a first judgment unit, configured to judge whether pre-stored payment account information of the payment terminal in the preset condition and payment account information in the first to-be-verified instruction are identical according to the pre-stored payment account information of the payment terminal in the preset condition and judge whether user feature information in the first to-be-verified instruction and user feature information in the second to-be-verified instruction are identical according to pre-stored user feature information of the payment terminal in the preset condition; and a second judgment unit, configured to judge whether the pre-stored payment account information of the payment terminal in the preset condition and the payment account information in the first to-be-verified instruction are identical according to the pre-stored payment account information of the payment terminal in the preset condition and judge whether the user feature information in the first to-be-verified instruction and the pre-stored user feature information are identical and whether the user feature information in the second to-be-verified instruction and the pre-stored user feature information are identical according to the pre-stored user feature information of the payment terminal in the preset condition.

In the embodiment of the present invention, the sending module, configured to send the verification result to the payment terminal and/or the money receiving terminal in one of the following manners, including: a first sending unit, configured to send a message of successful verification to the payment terminal and/or the money receiving terminal under a condition that judging results in the first judgment unit and the second judgment unit are respectively "identical"; and a second sending unit, configured to send a message of failed verification to the payment terminal and/or the money receiving terminal under a condition that at least one of the judging results in the first judgment unit or the second judgment unit is "different".

In the embodiment of the present invention, the apparatus further includes: a generation module, configured to generate a consumption detail according to the user feature information and the payment account information in the first to-be-verified instruction and the bill information in money receiving terminal information in the second to-be-verified instruction before sending the verification result to the payment terminal and/or the money receiving terminal; and a storage module, configured to store the consumption detail generated by the generation module.

According to one embodiment of the present invention, the present invention provides another payment verification system, including: a server, a payment terminal and a money receiving terminal, wherein the server establishes communication connections with the payment terminal and the money receiving terminal. The system is configured to receive a first to-be-verified instruction sent by the payment terminal and a second to-be-verified instruction sent by the money receiving terminal, judge whether the first to-be-verified instruction and the second to-be-verified instruction are identical according to a preset condition and send the verification result to the payment terminal and/or the money receiving terminal. The server is any of the above payment verification apparatuses.

Through embodiments of the present invention, the first to-be-verified instruction sent by the payment terminal and the second to-be-verified instruction sent by the money receiving terminal are received in the payment process; whether the first to-be-verified instruction and the second to-be-verified instruction are identical is judged according to the preset condition; and the verification result is sent to the payment terminal and/or the money receiving terminal, thereby solving the problem of the potential safety hazards as the verification manners are not secure enough, so as to achieve an effect of enhancing the security of the verification manners.

### BRIEF DESCRIPTION OF DRAWINGS

Drawings described herein are used for providing further understanding for the present invention, and form a part of the present application. Exemplary embodiments of the present invention and the description for the exemplary embodiments are used for explaining the present invention, rather than limiting the present invention. In the drawings:
Fig. 1 is a flow chart illustrating a payment verification method according to an embodiment of the present invention;
Fig. 2 is a flow chart illustrating information interaction of a payment verification method according to an embodiment of the present invention;
Fig. 3 is a structural block diagram illustrating a payment verification apparatus according to an embodiment of the present invention;
Fig. 4 is a structural block diagram illustrating a payment verification apparatus according to a preferable embodiment of the present invention;
Fig. 5 is another structural block diagram illustrating a payment verification apparatus according to a preferable embodiment of the present invention;
Fig. 6 is another structural block diagram illustrating a payment verification apparatus according to an embodiment of the present invention;
Fig. 7 is a structural diagram illustrating a payment verification system according to an embodiment of the present invention; and
Fig. 8 is a flow chart illustrating voice-based verification in the present invention.

### DETAILED DESCRIPTION

The present invention is described below in detail with reference to drawings and in combination with embodiments. It should be noted that, embodiments in the present application and the features in embodiments can be randomly combined without conflict.

### Embodiment 1

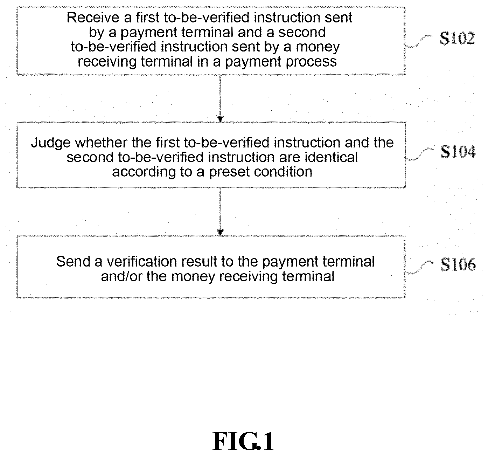

The present embodiment provides a payment verification method. Fig. 1 is a flow chart illustrating the payment verification method according to an embodiment of the present invention. As shown in Fig. 1, the flow includes following steps.

In step S102, a first to-be-verified instruction sent by a payment terminal and a second to-be-verified instruction sent by a money receiving terminal are received in a payment process;

in step S104, whether the first to-be-verified instruction and the second to-be-verified instruction are identical is judged according to a preset condition; and

in step S106, the verification result is sent to the payment terminal and/or the money receiving terminal.

Through the above steps, the first to-be-verified instruction sent by the payment terminal and the second to-be-verified instruction sent by the money receiving terminal are received in the payment process; whether the first to-be-verified instruction and the second to-be-verified instruction are identical is judged according to the preset condition; and the verification result is sent to the payment terminal and/or the money receiving terminal, thereby solving the problem of potential safety hazards as the verification manner is not secure enough, so as to achieve an effect of enhancing the security of the verification manner.

From the above contents, it can be known that the payment terminal includes at least one of the following: a smartphone, a tablet PC (Personal Computer), an MP3 (Mobile Pentium 3), an MP4 (Mobile Pentium 4) and a palmtop computer; and the money receiving terminal includes at least one of the following: a POS machine and a cash register. The payment verification method provided in the embodiment of the present invention is suitable for a server, and in the embodiment of the present invention, the payment terminal is described by taking the smartphone as an example, and the money receiving terminal is described by taking a cash register as an example.

For example, in the payment process, the server receives the first to-be-verified instruction reported by the smartphone and the second to-be-verified instruction reported by the cash register, wherein the first to-be-verified instruction is generated by collecting user features by a payment client and in combination with account information of the payment client when the to-be-verified instruction is reported by the smartphone; the second to-be-verified instruction is generated by collecting the user features and in combination with ID and bill information stored by the cash register when the to-be-verified instruction is reported by the cash register; and whether the first to-be-verified instruction and the second to-be-verified instruction are identical is judged by the preset condition in the server, so as to obtain a verification result when in comparison that whether the first to-be-verified instruction and the second to-be-verified instruction are identical.

In conclusion, in a payment verification process, compared with existing password verification and gesture verification, a password input process and a gesture input verification process are saved through verification for the user features, thereby improving the payment efficiency; in addition, since a situation of wrong input is easily caused in the password input process and the gesture input process, the accuracy rate of payment verification is improved through the verification for the user features; and further, since the user features have uniqueness, information security is more reliable, so as to improve the security of the payment verification.

In the embodiment of the present invention, the first to-be-verified instruction includes at least one of the following: user feature information and payment account information; and the second to-be-verified instruction includes at least one of the following: user feature information and money receiving terminal information.

In the embodiment of the present invention, the user feature information includes at least one of the following: voice, facial features and retina information; and/or the payment account information includes: account; and/or the money receiving terminal information includes at least one of the following: money receiving terminal ID and bill information.

Herein, through combination of the step S102-step S106, the user features may be one of the voice, the facial features and the retina information, the money receiving terminal ID in the money receiving terminal information may be ID subordinate to the cash register or an account related to the cash register, which is pre-stored at a server, and the bill information may be a purchasing list of a user using the payment terminal currently.

For example, the above contents are still taken as an example, wherein the user features are described by taking the voice as an example, and a user A using the smartphone exists. In a payment process, the step that the server receives the first to-be-verified instruction sent by the payment terminal and the second to-be-verified instruction sent by the money receiving terminal is specifically described below:

the first to-be-verified instruction and the second to-be-verified instruction, which are received by the server, are respectively obtained in the following manners:

for the first to-be-verified instruction: the smartphone collects the voice of the user A, and the voice of the user A and an account of a payment client of the smartphone are encapsulated, so as to obtain the first to-be-verified instruction; and the first to-be-verified instruction is sent to the server; and

meanwhile, for the second to-be-verified instruction: since a payment connection is pre-established between the smartphone and the cash register, the cash register collects the voice of the user A by a configured microphone while the smartphone collects the voice of the user A, and the total settlement amount of the purchasing list of the user A, the ID of the cash register and the collected voice of the user A are all sent to the server.

In the embodiment of the present invention, in the step 104, whether the first to-be-verified instruction and the second to-be-verified instruction are identical is judged according to the preset condition in one of the following manners, including:

manner I: whether pre-stored payment account information of the payment terminal in the preset condition and the payment account information in the first to-be-verified instruction are identical is judged according to the pre-stored payment account information of the payment terminal in the preset condition, and whether the user feature information in the first to-be-verified instruction and the user feature information in the second to-be-verified instruction are identical is judged according to pre-stored user feature information of the payment terminal in the preset condition.

For example, the above user A is still taken as an example, wherein the server stores the account of the payment client in the smartphone used by the user A and a voice verification instruction, therefore, verifying the first to-be-verified instruction and the second to-be-verified instruction includes following steps.

In step 1, the server compares the account in the payment account information in the first to-be-verified instruction with a pre-stored account, so as to ensure that the received account refers to account payment corresponding to the same account; and

in step 2, the server compares voice carried in the first to-be-verified instruction and voice carried in the second to-be-verified instruction with tones of the pre-stored voice verification instruction, so as to ensure that a user using the account of the Step 1 currently is the same user A.

Manner II: whether the pre-stored payment account information of the payment terminal in the preset condition and the payment account information in the first to-be-verified instruction are identical is judged according to the pre-stored payment account information of the payment terminal in the preset condition, and whether the user feature information in the first to-be-verified instruction and the pre-stored user feature information are identical and whether the user feature information in the second to-be-verified instruction and the pre-stored user feature information are identical are judged according to the pre-stored user feature information of the payment terminal in the preset condition.

In step 1, the server compares the account in the payment account information in the first to-be-verified instruction with a pre-stored account, so as to ensure that the received account refers to account payment corresponding to the same account; and

in step 2, the server compares tones and contents of voice carried in the first to-be-verified instruction with tones and contents of the pre-stored voice verification instruction and compares tones and contents of voice carried in the second to-be-verified instruction with tones and contents of the pre-stored voice verification instruction, so as to ensure that a user using the account of the Step 1 currently is the same user A and ensure the accuracy rate of voice verification.

In the embodiment of the present invention, in the step S106, the verification result is sent to the payment terminal and/or the money receiving terminal in one of the following manners, including:

a message of successful verification is sent to the payment terminal and/or the money receiving terminal under the condition that judging results in the manner I and in the manner II are respectively "identical";

such as the situations in the manner I or in the manner II, the manner I is taken as an example, wherein the verification is passed if judging results in the Step 1 and the Step 2 in the manner I are respectively "identical", and the server sends the message of successful verification to the payment terminal and/or the money receiving terminal. The manner II is the same as above, which is not repeated again.

A message of failed verification is sent to the payment terminal and/or the money receiving terminal under the condition that at least one of the judging results in the manner I or in the manner II is "different".

As described above, the verification is failed if any of the judging results obtained by the verification in the Step 1 and the Step 2 of the manner I or the manner II is "different", and the server sends the message of failed verification to the payment terminal and/or the money receiving terminal.

In the embodiment of the present invention, before the step S106 of sending the verification result to the payment terminal and/or the money receiving terminal, the method further includes following steps.

In step 107, a consumption detail is generated according to the user feature information and the payment account information in the first to-be-verified instruction and the bill information in the money receiving terminal information in the second to-be-verified instruction; and
in step 108, the consumption detail is stored.

Through combination of the step 107 and the step 108, the server stores a verification detail to further generate the consumption detail, so as to store the consumption detail, thereby facilitating inquiry of the user A if the verification is successful.

In the embodiment of the present invention, the first to-be-verified instruction and the second to-be-verified instruction are received under the following condition: the payment connection is pre-established between the payment terminal and the money receiving terminal.

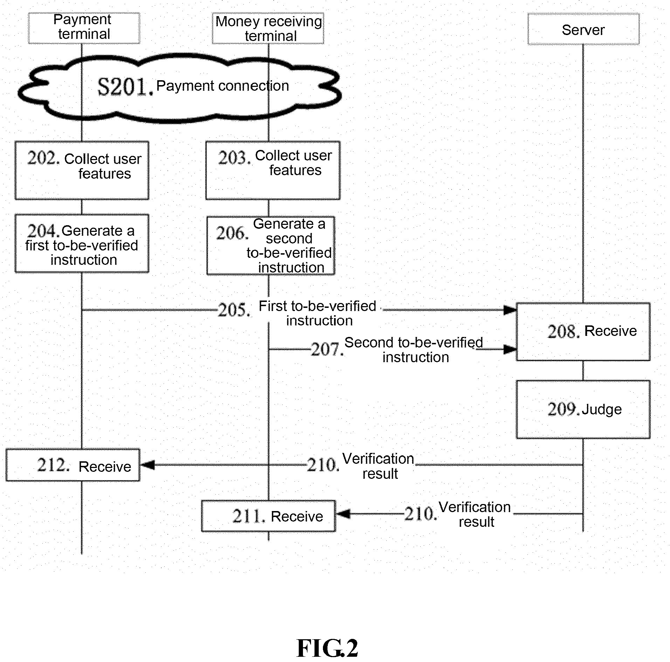

Fig. 2 is a flow chart illustrating information interaction of the payment verification method according to an embodiment of the present invention. As shown in Fig. 2, a flow of information interaction includes following steps.

In step S201, a payment connection is established between a payment terminal and a money receiving terminal;
in step S202, the payment terminal collects user features;
in step S203, the money receiving terminal collects user features;
in step S204, the payment terminal generates a first to-be-verified instruction with the collected user features and a payment account;
in step S205, the payment terminal sends the first to-be-verified instruction to a server;
in step S206, the money receiving terminal generates a second to-be-verified instruction with the collected user features and payment terminal information;
in step S207, the money receiving terminal sends the second to-be-verified instruction to the server;
in step S208, the server receives the first to-be-verified instruction sent by the payment terminal and the second to-be-verified instruction sent by the money receiving terminal;
in step S209, the server judges whether the first to-be-verified instruction and the second to-be-verified instruction are identical according to a preset condition;
in step S210, the server sends a verification result to the payment terminal and/or the money receiving terminal;
in step S211, the payment terminal receives the verification result sent by the server; and
in step S212, the money receiving terminal receives the verification result sent by the server.

In the payment verification method provided by the embodiment of the present invention, the voice is taken as an example, and a verification manner by the facial features or the retina information is the same as the verification manner by the voice, which is not repeated again. In addition, besides the above verification manners, peculiar lines of a human body can also be served as a verification instruction, such as fingerprints, a verification manner by the fingerprints is the same as the verification manner by the voice; and the embodiment of the present invention is subject to realization of one payment verification method, which is not limited specifically.

### Embodiment 2

The present embodiment further provides a payment verification apparatus. The apparatus is used for realizing the above embodiment and a preferable implementation manner, and the contents described are not repeated again. For example, the term 'module' used hereinafter can realize combination of software and/or hardware with preset functions. Although the apparatus described by the following embodiment is better realized by the software, the realization by the hardware or the combination of the software and the hardware is also possibly conceived.

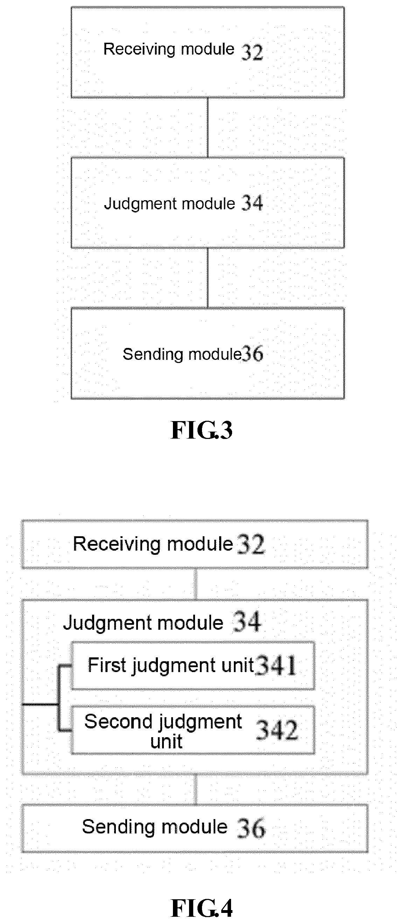

Fig. 3 is a structural block diagram illustrating the payment verification apparatus according to an embodiment of the present invention. As shown in Fig. 3, the apparatus includes: a receiving module 32, a judgment module 34 and a sending module 36, wherein

the receiving module 32 is configured to receive a first to-be-verified instruction sent by a payment terminal and a second to-be-verified instruction sent by a money receiving terminal in a payment process;

the judgment module 34 establishes a communication connection with the receiving module 32 and is configured to judge whether the first to-be-verified instruction and the second to-be-verified instruction, which are received by the receiving module 32, are identical according to a preset condition; and

the sending module 36 establishes a communication connection with the judgment module 34 and is configured to send the verification result obtained by the judgment module 34 to the payment terminal and/or the money receiving terminal.

In the embodiment of the present invention, Fig. 4 is a structural block diagram illustrating the payment verification apparatus according to a preferable embodiment of the present invention. As shown in Fig. 4, the judgment module 34 is configured to judge whether the first to-be-verified instruction and the second to-be-verified instruction are identical according to the preset condition in one of the following manners, including:

a first judgment unit 341, configured to judge whether pre-stored payment account information of the payment terminal in the preset condition and payment account information in the first to-be-verified instruction are identical according to the pre-stored payment account information of the payment terminal in the preset condition and judge whether user feature information in the first to-be-verified instruction and user feature information in the second to-be-verified instruction are identical according to pre-stored user feature information of the payment terminal in the preset condition; and

a second judgment unit 342, configured to judge whether the pre-stored payment account information of the payment terminal in the preset condition and the payment account information in the first to-be-verified instruction are identical according to the pre-stored payment account information of the payment terminal in the preset condition and judge whether the user feature information in the first to-be-verified instruction and the pre-stored user feature information are identical and whether the user feature information in the second to-be-verified instruction and the pre-stored user feature information are identical according to the pre-stored user feature information of the payment terminal in the preset condition.

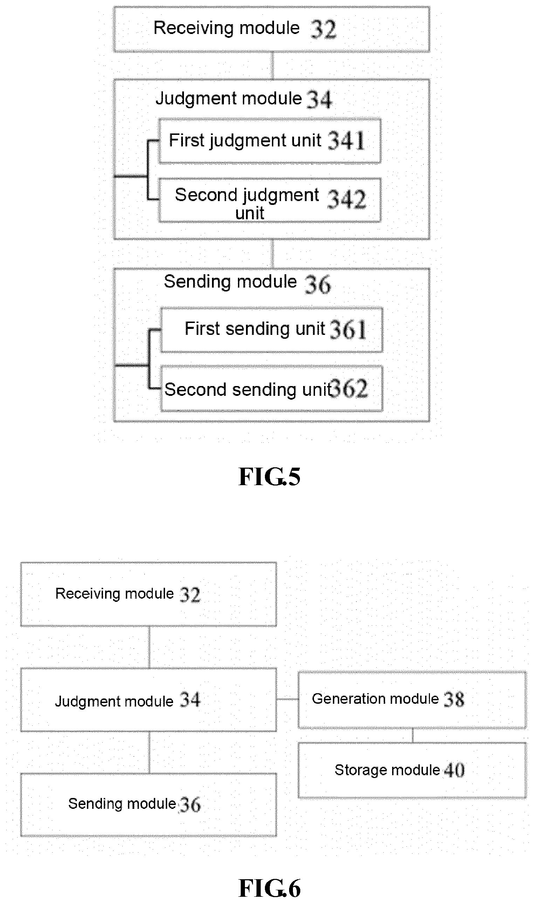

In the embodiment of the present invention, Fig. 5 is a structural block diagram illustrating the payment verification apparatus according to a preferable embodiment of the present invention. As shown in Fig. 5, the sending module 36 is configured to send the verification result to the payment terminal and/or the money receiving terminal in one of the following manners, including:

a first sending unit 361, configured to send a message of successful verification to the payment terminal and/or the money receiving terminal under the condition that judging results in the first judgment unit 341 and the second judgment unit 342 are respectively "identical"; and

a second sending unit 362, configured to send a message of failed verification to the payment terminal and/or the money receiving terminal under the condition that at least one of the judging results in the first judgment unit 341 or the second judgment unit 342 is "different".

In the embodiment of the present invention, Fig. 6 is a structural block diagram illustrating the payment verification apparatus according to an embodiment of the present invention. As shown in Fig. 6, besides all the modules shown in Fig. 3, the apparatus further includes: a generation module 38 and a storage module 40, wherein
the generation module 38 is configured to generate a consumption detail according to the user feature information and the payment account information in the first to-be-verified instruction and bill information in the money receiving terminal information in the second to-be-verified instruction before the verification result is sent to the payment terminal and/or the money receiving terminal; and
the storage module 40 establishes a connection relationship with the generation module 38 and is configured to store the consumption detail generated by the generation module 38.

### Embodiment 3

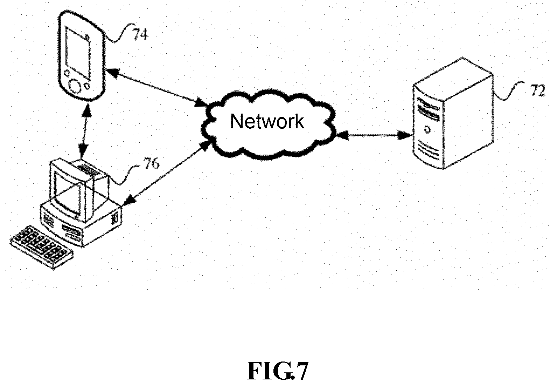

The present embodiment provides a payment verification system. Fig. 7 is a structural diagram illustrating the payment verification system according to an embodiment of the present invention. As shown in Fig. 7, the system includes: a server 72, a payment terminal 74 and a money receiving terminal 76, wherein
the server 72 establishes communication connections with the payment terminal 74 and the money receiving terminal 76, and is configured to receive a first to-be-verified instruction sent by the payment terminal 74 and a second to-be-verified instruction sent by the money receiving terminal 76, judge whether the first to-be-verified instruction and the second to-be-verified instruction are identical according to a preset condition and send the verification result to the payment terminal 74 and/or the money receiving terminal 76,
wherein the server 72 is the payment verification apparatus shown in any of Figs. 3-6.

The embodiment of the present invention adopts a strategy that a voice password is simultaneously input by the payment terminal and the money receiving terminal for identity verification and payment, namely, the random voice password is dictated on site when in payment of a user, a phone terminal and the money receiving terminal simultaneously receive the random voice password and send the random voice password to the server, and the server analyzes and authenticates the password; the user verification is successful if the authentication is passed; and the user verification is failed if the authentication is failed.

A method provided by the embodiment of the present invention mainly includes following steps.

In step 1: a terminal user initiates a verification operation;
in step 2: the user speaks a voice password on site, and a payment terminal and a money receiving terminal simultaneously encode the password and then send the password to a server after receiving the voice password;
in step 3: the server decodes the password after receiving the voice password;
in step 4: the server authenticates the analyzed password, including two aspects: in one aspect, judgment for an account, used for determining the account is an account which sends an instruction; and in the other aspect, judgment for password contents, used for judging whether passwords of the payment terminal and the money receiving terminal are consistent;
in step 5: the server returns a verification result to a client: the verification is failed if the authentication is failed; and the verification is successful if the password authentication is passed, and meanwhile, the voice is recorded as a memo of the verification; and
in step 6: the verification is ended.

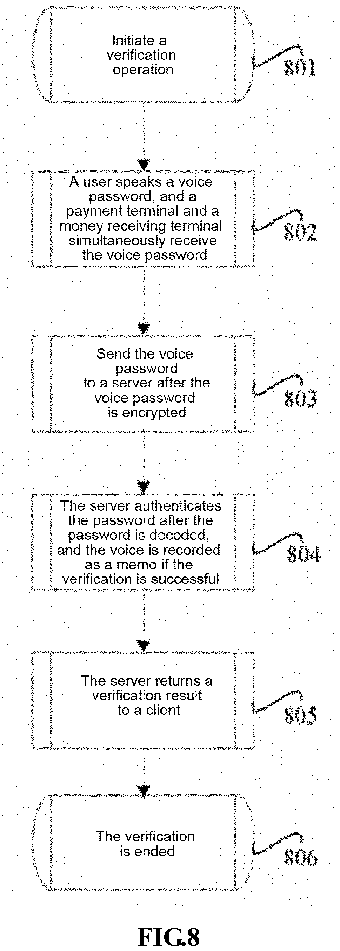

Details are described as follows, Fig. 8 is a flow chart illustrating voice-based verification in the present invention, and the specific implementation steps are as follows.

In step 801: a terminal user initiates a verification operation;
in step 802: the user speaks a voice password on site, and a payment terminal and a money receiving terminal simultaneously encode the password and then send the password to a server after receiving the voice password;
in step 803: the server decodes the password after receiving the voice password;
in step 804: the server authenticates the analyzed password, including two aspects: in one aspect, judgment for an account, used for determining the account is an account which sends an instruction; and in the other aspect, judgment for password contents, used for judging whether passwords of the payment terminal and the money receiving terminal are consistent;
in step 805: the server returns a verification result to a client: the verification is failed if the authentication is failed; and the verification is successful if the password authentication is passed, and meanwhile, the voice is recorded as a memo of the verification; and
in step 806: the verification is ended.

Apparently, those skilled in the art should understand that all the above modules or all the above steps of the present invention may be realized by a general calculating apparatus and may be concentrated on a single calculating apparatus or distributed on a network formed by a plurality of calculating apparatus. Optionally, all the modules or all the steps of the present invention may be realized by an executable procedure code of the calculating apparatus. Therefore, all the modules or all the steps of the present invention may be stored in a storage apparatus and executed by the calculating apparatus. In addition, under some situations, all the modules or all the steps of the present invention may be realized in a manner that the shown or described steps may be executed in a sequence different from a sequence herein or are respectively made into integrated circuit modules, or a plurality of modules or steps thereof are made into a single integrated circuit module. In this way, the present invention is not limited to any combination of specific hardware and software.

The above descriptions are only preferable embodiments of the present invention, rather than limiting the present invention. The present invention can have various modifications and changes for those skilled in the art. Any modification, equivalent replacement, improvement and the like made within the spirit and the principle of the present invention should be included in the protection scope of the present invention.

### Industrial Applicability

The technical solutions provided by embodiments of the present invention can be applied in a payment process of a terminal. In the payment process, the first to-be-verified instruction sent by the payment terminal and the second to-be-verified instruction sent by the money receiving terminal are received; whether the first to-be-verified instruction and the second to-be-verified instruction are identical is judged according to the preset condition; and the verification result is sent to the payment terminal and/or the money receiving terminal. According to embodiments of the present invention, the problem of potential safety hazards as the verification manner is not secure enough is solved, so as to achieve an effect of enhancing the security of the verification manner.

## Claims

1. A payment verification method, comprising:
receiving a first to-be-verified instruction sent by a payment terminal and a second to-be-verified instruction sent by a money receiving terminal in a payment process;
judging whether the first to-be-verified instruction and the second to-be-verified instruction are identical according to a preset condition; and
sending a verification result to the payment terminal and/or the money receiving terminal.

2. The method according to claim 1, wherein
the first to-be-verified instruction comprises at least one of the following: user feature information and payment account information; and
the second to-be-verified instruction comprises at least one of the following:
user feature information and money receiving terminal information.

3. The method according to claim 2, wherein the user feature information comprises at least one of the following: voice, facial features and retina information; and/or the payment account information comprises: account; and/or the money receiving terminal information comprises at least one of the following:
money receiving terminal ID and bill information.

4. The method according to claim 2, wherein whether the first to-be-verified instruction and the second to-be-verified instruction are identical is judged according to the preset condition in one of the following manners, comprising:
manner I: judging whether pre-stored payment account information of the payment terminal in the preset condition and the payment account information in the first to-be-verified instruction are identical according to the pre-stored payment account information of the payment terminal in the preset condition and judging whether the user feature information in the first to-be-verified instruction and the user feature information in the second to-be-verified instruction are identical according to pre-stored user feature information of the payment terminal in the preset condition; and
manner II: judging whether the pre-stored payment account information of the payment terminal in the preset condition and the payment account information in the first to-be-verified instruction are identical according to the pre-stored payment account information of the payment terminal in the preset condition and judging whether the user feature information in the first to-be-verified instruction and the pre-stored user feature information are identical and whether the user feature information in the second to-be-verified instruction and the pre-stored user feature information are identical according to the pre-stored user feature information of the payment terminal in the preset condition.

5. The method according to claim 4, wherein the verification result is sent to the payment terminal and/or the money receiving terminal in one of the following manners, comprising:
sending a message of successful verification to the payment terminal and/or the money receiving terminal under the condition that judging results in the manner I and in the manner II are respectively "identical"; and
sending a message of failed verification to the payment terminal and/or the money receiving terminal under the condition that at least one of the judging results in the manner I or the manner II is "different".

6. The method according to claim 2, before sending the verification result to the payment terminal and/or the money receiving terminal, further comprising:
generating a consumption detail according to the user feature information and the payment account information in the first to-be-verified instruction and the bill information in the money receiving terminal information in the second to-be-verified instruction; and
storing the consumption detail.

7. The method according to claim 1, wherein the first to-be-verified instruction and the second to-be-verified instruction are received under the following condition:
a payment connection is pre-established between the payment terminal and the money receiving terminal.

8. A payment verification apparatus, comprising:
a receiving module, configured to receive a first to-be-verified instruction sent by a payment terminal and a second to-be-verified instruction sent by a money receiving terminal in a payment process;
a judgment module, configured to judge whether the first to-be-verified instruction and the second to-be-verified instruction, which are received by the receiving module, are identical according to a preset condition; and
a sending module, configured to send a verification result obtained by the judgment module to the payment terminal and/or the money receiving terminal.

9. The apparatus according to claim 8, wherein the judgment module, configured to judge whether the first to-be-verified instruction and the second to-be-verified instruction are identical according to the preset condition in one of the following manners, comprises:
a first judgment unit, configured to judge whether pre-stored payment account information of the payment terminal in the preset condition and payment account information in the first to-be-verified instruction are identical according to the pre-stored payment account information of the payment terminal in the preset condition and judge whether user feature information in the first to-be-verified instruction and user feature information in the second to-be-verified instruction are identical according to pre-stored user feature information of the payment terminal in the preset condition; and
a second judgment unit, configured to judge whether the pre-stored payment account information of the payment terminal in the preset condition and the payment account information in the first to-be-verified instruction are identical according to the pre-stored payment account information of the payment terminal in the preset condition and judge whether the user feature information in the first to-be-verified instruction and the pre-stored user feature information are identical and whether the user feature information in the second to-be-verified instruction and the pre-stored user feature information are identical according to the pre-stored user feature information of the payment terminal in the preset condition.

10. The apparatus according to claim 9, wherein the sending module, configured to send the verification result to the payment terminal and/or the money receiving terminal in one of the following manners, comprises:
a first sending unit, configured to send a message of successful verification to the payment terminal and/or the money receiving terminal under the condition that judging results in the first judgment unit and the second judgment unit are respectively "identical"; and
a second sending unit, configured to send a message of failed verification to the payment terminal and/or the money receiving terminal under the condition that at least one of the judging results in the first judgment unit or the second judgment unit is "different".

11. The apparatus according to claim 8, further comprising:
a generation module, configured to generate a consumption detail according to the user feature information and the payment account information in the first to-be-verified instruction and the bill information in money receiving terminal information in the second to-be-verified instruction before sending the verification result to the payment terminal and/or the money receiving terminal; and
a storage module, configured to store the consumption detail generated by the generation module.

12. A payment verification system, comprising: a server, a payment terminal and a money receiving terminal, wherein
the server establishes communication connections with the payment terminal and the money receiving terminal, and is configured to receive a first to-be-verified instruction sent by the payment terminal and a second to-be-verified instruction sent by the money receiving terminal, judge whether the first to-be-verified instruction and the second to-be-verified instruction are identical according to a preset condition and send a verification result to the payment terminal and/or the money receiving terminal; and
the server is the payment verification apparatus in any of claims 8-11.
